# EUROPÄISCHE PATENTSCHRIFT

(11) **EP 1 147 003 B1**
(45) Veröffentlichungstag und Bekanntmachung des Hinweises auf die Patenterteilung: **20.08.2003**
(21) Anmeldenummer: 99908752.1
(22) Anmeldetag: 29.01.1999
(51) Int. Cl.: B29C 47/02, B23K 20/10

(54) **ANLAGE ZUM HERSTELLEN VON MEHRSCHICHT-VERBUNDROHREN**
FACILITY FOR MANUFACTURING MULTILAYERED COMPOSITE TUBES
INSTALLATION POUR LA PRODUCTION DE TUBES COMPOSITES MULTICOUCHES

(43) Veröffentlichungstag der Anmeldung: 24.10.2001
(73) Patentinhaber: Uponor Innovation AB, 513 18 Fristad (SE)
(72) Erfinder: NEUBAUER, Gerhard, D-97486 Königsberg (DE); GERBER, Frank, D-98529 Suhl (DE)
(74) Vertreter: LOUIS- PÖHLAU- LOHRENTZ
(86) Internationale Anmeldenummer: DE9900224
(87) Internationale Veröffentlichungsnummer: WO00044546

(56) Entgegenhaltungen:
- EP-A- 0 024 220
- EP-A- 0 353 977
- EP-A- 0 581 208
- EP-A- 0 644 031
- FR-A- 2 599 667
- US-A- 4 911 778

## Beschreibung

Die Erfindung betrifft eine Anlage zum Herstellen von Mehrschicht-Verbundrohren gemäß dem Oberbegriff des Anspruches 1.

Eine derartige Anlage ist aus der FR-A-2 599 667 bekannt. Bei dieser bekannten Anlage wird ein Metallstreifen verarbeitet, der Durchbrechungen aufweist, durch die hindurch die Kunststoffinnenschicht und die Kunststoffaußenschicht miteinander verbunden werden.

Desweiteren sind Anlagen zum Herstellen von Mehrschicht-Verbundrohren bekannt, bei welchen der Extrusionskopf mit einem ersten Extruder für die Kunststoff-Innenschicht fest verbunden ist. Der für die Kunststoff-Außenschicht vorgesehene zweite Extruder ist von der Einheit aus Extrusionskopf und erstem Extruder räumlich getrennt und mit dem Extrusionskopf strömungstechnisch geeignet verbunden.

Der Erfindung liegt die Aufgabe zugrunde, eine Anlage der eingangs genannten Art zu schaffen, die mit vergleichsweise großer und in Kenntnis dieser Gegebenheiten liegt der Erfindung die Aufgabe zugrunde, eine Anlage der eingangs genannten Art zu schaffen, die mit vergleichsweise großer Produktionsgeschwindigkeit eine optimale Verbundrohr-Qualität ermöglicht, wobei auch ein Verbundrohr-Nennweitenwechsel relativ einfach und zeitsparend möglich ist.

Diese Aufgabe wird bei einer Anlage der eingangs genannten Art erfindungsgemäß durch die Merkmale des Patentanspruches 1 gelöst.

Der Begriff "Produktionslinie" bedeutet die Linie, entlang welcher sich der Metallstreifen entlang der Umformeinrichtung zum Umformen des Metallstreifens zu dem jeweiligen Metallrohr, zur Schweißeinrichtung zum Verschweißen der sich überlappenden Längsränder des umgeformten Metallstreifens zum Metallrohr, bewegt, wobei die Produktionslinie insbesondere auch durch die Extruderstation, d. h. durch den Extrusionskopf, und danach durch die Kühleinrichtung zum Abkühlen des hergestellten Mehrschicht-Verbundrohres bestimmt ist. Der Metallstreifen bzw. das mit der Anlage hergestellte Mehrschicht-Verbundrohr wird geradlinig mit einer bestimmten, vergleichsweise großen Vorschubgeschwindigkeit durch die Anlage bewegt. Während bei bekannten Anlagen bei einem bestimmten Verbundrohr-Durchmesser, d. h. -Nennweite, die Vorschubgeschwindigkeit größenordnungsmäßig z. B. 15 m/min beträgt, ist es mit der erfindungsgemäßen Anlage bei gleichem Verbundrohr-Durchmesser möglich, die Produktionsgeschwindigkeit auf größenordnungsmäßig 25 m/min, d. h. um 67 %, zu erhöhen, wobei dieser Vorteil der erfindungsgemäßen Anlage mit den Vorteilen der Möglichkeit eines einfachen und zeitsparenden Verbundrohr-Durchmesserwechsels bei einer grundflächen- bzw. platzsparenden Anordnung der erfindungsgemäßen Anlage einhergeht.

Erfindungsgemäß sind ein dritter und ein vierter Extruder für Haftvermittler vorgesehen, wobei der dritte Extruder dem ersten Extruder für die Kunststoff-Innenschicht und der vierte Extruder dem zweiten Extruder für die Kunstoffaußenschicht des Mehrschicht-Verbundrohres zugeordnet ist.

Der dritte und der vierte Extruder für Haftvermittler sind an zugehörigen ortsfesten Säuleneinrichtungen kardanisch angebracht. Hierdurch wird die Genauigkeit der Anlage und ihre Produktivität verbessert, weil ihre Einstellbarkeit optimiert ist.

Als vorteilhaft hat es sich bei der erfindungsgemäßen Anlage erwiesen, wenn die Schweißeinrichtung eine Schweißstation mit einem Ultraschall-Schweißrad aufweist, wobei die Schweißstation in einer zur Produktionslinie parallelen ersten Raumrichtung in einer dazu senkrechten zweiten Raumrichtung quer zur Produktionslinie und in einer zur ersten und zur zweiten Raumrichtung senkrechten dritten Raumrichtung in bezug zum Extrusionskopf in der Höhe verstellbar und um eine in der ersten Raumrichtung orientierte Schwenkachse verschwenkbar ist. Diese Verstellung und/oder Verschwenkung kann pneumatisch oder mechanisch z. B. durch Spindelantriebe realisiert sein. Diese Verstellbarkeit ermöglicht nicht nur einen zeitsparenden Nennweitenwechsel, d.h. die zeitsparende Möglichkeit, die Anlage von einem Verbundrohrdurchmesser auf einen gewünschten anderen Verbundrohrdurchmesser umzustellen, sondern außerdem auch den erheblichen Vorteil, daß der Zugang zur Anlage bei solchen Nennweitenwechseln oder Produktionsstörungen verbessert möglich ist. Mögliche Produktionsstörungen können sehr schnell behoben werden.

Das Ultraschall-Schweißrad ist bei der erfindungsgemäßen Anlage zweckmäßigerweise zu seinem gesteuerten Drehantrieb mit einem Antriebsmotor verbunden. Mit Hilfe des besagten Antriebsmotors wird die Drehgeschwindigkeit des eine Sonotode bildenden Ultraschall-Schweißrades an die Vorschubgeschwindigkeit der Anlage, d.h. des zum Metallrohr umgeformten Metallstreifens, genau angepaßt, um ein hochgenaues Metallrohr zu realisieren, das haftfest mit der Kunststoff-Innen- und Außenschicht versehen wird.

Zur Realisierung des hochpräzisen Metallrohres aus dem entsprechenden Metallstreifen hat es sich als zweckmäßig erwiesen, wenn zur Schweißeinrichtung zwei Schließrolleneinrichtungen benachbart sind, die jeweils mehr als zwei am Umfang verteilte und aneinander angrenzende Schließrollen aufweisen. Jede der beiden Schließrolleneinrichtungen kann vier aneinander angrenzende Schließrollen aufweisen.

Um eine Anpassung an unterschiedliche Materialqualitäten von zum Metallrohr umzuformenden Metallstreifen bezüglich Maßtoleranzen, Steifigkeiten des Materials usw. zu ermöglichen, ist es zweckmäßig, wenn mindestens einige der Schließrollen der jeweiligen Schließrolleneinrichtung radial verstellbar sind.

Ein präziser Verbundrohr-Nennweitenwechsel wird erfindungsgemäß dadurch weiter verbessert ermöglicht, daß bei der erfindungsgemäßen Anlage die Umformeinrichtung ein Grundelement aufweist, auf der Umform-Rollenpaare in Vorschubrichtung des umzuformenden Metallstreifens voneinander beabstandet hintereinander angeordnet sind, wobei das Grundelement in der zweiten Raumrichtung quer zur Produktionslinie und in der dritten Raumrichtung vertikal verstellbar und um eine in der zweiten Raumrichtung orientierte Schwenkachse sowie um eine in der dritten Raumrichtung orientierte Schwenkachse verschwenkbar ist. Durch eine solche lineare und quasi kardanische Anordnung des Grundelementes sind die an ihm vorgesehenen Umform-Rollenpaare zeitsparend präzise einstellbar, was sich auf die Produktivität der erfindungsgemäßen Anlage vorteilhaft auswirkt. Durch diese Ausbildung der zuletzt genannten Art ist es außerdem einfach möglich, die Umformeinrichtung sehr schnell exakt auf die jeweilige Metallstreifenbreite und somit auf den gewünschten Rohrdurchmesser um- und einzustellen. Dabei können zur Verstellung in der zweiten Raumrichtung und um die in der zweiten Raumrichtung orientierte Schwenkachse sowie zur Verstellung in der dritten Raumrichtung und um die in der dritten Raumrichtung orientierte Schwenkachse Einstellräder vorgesehen sein. Bei diesen Einstellrädern kann es sich z.B. um Handräder handeln, um eine entsprechende manuelle Einstellung vorzunehmen.

Bei der erfindungsgemäßen Anlage ist der Umformeinrichtung in Produktionsrichtung stromaufwärts eine Metallstreifen-Abwickeleinrichtung vorgeordnet, die in der zweiten Raumrichtung quer zur Produktionslinie verstellbar ist.

Durch diese Querverstellbarkeit der Metallstreifen-Abwickeleinrichtung ist es in vorteilhafter Weise einfach möglich, die Metallstreifen-Abwickeleinrichtung in Abhängigkeit von der Breite des jeweils zu verarbeitenden Metallstreifens exakt einzustellen, d.h. die Metallstreifen-Abwickeleinrichtung und somit den jeweiligen Metallstreifen genau, d.h. exakt in bezug zur Produktionslinie zu zentrieren. Diese zentrierende Verstellung der Metallstreifen-Abwickeleinrichtung ist einfach und sehr zeitsparend möglich.

Die Metallstreifen-Abwickeleinrichtung kann eine einzige Spulenaufnahme für eine Metallstreifen-Spule aufweisen, bevorzugt ist es jedoch, wenn die Metallstreifen-Abwickeleinrichtung ein Standelement mit zwei Spulenaufnahmen aufweist, wobei das Standelement um eine Vertikalachse drehbar ist und die beiden Spulenaufnahmen an voneinander abgewandten Seiten des Standelementes vorgesehen sind. Eine solche Ausbildung der zuletzt genannten Art weist im Vergleich mit einer Metallstreifen-Abwickeleinrichtung mit einer einzigen Spulenaufnahme den Vorteil auf, daß ein Metallstreifen-Wechsel von einer verbrauchten Metallstreifen-Spule zu einer ungebrauchten neuen Metallstreifen-Spule zeitsparend möglich ist. Auch das wirkt sich auf die Produktivität der erfindungsgemäßen Anlage vorteilhaft aus.

Insbesondere dann, wenn bei der erfindungsgemäßen Anlage die Metallstreifen-Abwickeleinrichtung ein Standelement mit einer einzigen Spulenaufnahme aufweist, ist es zweckmäßig, wenn zwischen der Metallstreifen-Abwickelvorrichtung und der Metallstreifen-Umformeinrichtung eine Metallstreifen-Speichereinrichtung vorgesehen ist, die vertikale, zueinander und zur Produktionslinie parallel angeordnete Seitenwände aufweist, weil es in dieser Metallstreifen-Speichereinrichtung möglich ist, einen entsprechenden Endabschnitt bzw. eine Restlänge der verbrauchten Metallstreifen-Spule zu deponieren und das Ende dieses verbrauchten Metallstreifens mit dem Anfang einer neuen Metallstreifen-Spule fest zu verbinden. Während dieses Verbindens der beiden Enden, was zweckmäßigerweise durch Ultaschall-Verschweißen erfolgt, kann der in der Metallstreifen-Speichereinrichtung befindliche Rest des Metallstreifens kontinuierlich zum Mehrschicht-Verbundrohr weiterverarbeitet werden. Durch die zueinander und zur Produktionslinie parallel angeordneten vertikalen Seitenwände der Metallstreifen-Speichereinrichtung wird hierbei eine Führung der gespeicherten Metallstreifen-Länge bewirkt.

Unter dem Gesichtspunkt, an der erfindungsgemäßen Anlage Metallstreifen unterschiedlicher Streifenbreite mit hoher Produktivität verarbeiten zu können, ist es zweckmäßig, wenn die Seitenwände der Metallstreifen-Speichereinrichtung zur Produktionslinie spiegelbildlich symmetrisch simultan verstellbar sind. Diese Verstellung kann bspw. mittels eines Handrades durchgeführt werden, das mit den beiden Seitenwänden der Metallstreifen-Speichereinrichtung geeignet kombiniert ist. Das kann bspw. durch Spindelantriebe und einen die Spindeln gemeinsam antreibenden Riemen o.dgl. erfolgen.

Um auch während jedes Anfahr-Betriebes der erfindungsgemäßen Anlage, d.h. während des Befüllens der Kühleinrichtung mit der Kühlflüssigkeit eine Kühlung des entsprechenden Anfangsabschnittes des Mehrschicht-Verbundrohres zu bewirken, ist es zweckmäßig, wenn bei der erfindungsgemäßen Anlage die Kühleinrichtung ein längliches Flüssigkeitsbad mit einer Düseneinrichtung und mit Verbundrohr-Niederhaltereinrichtungen aufweist, wobei die Düseneinrichtung mit voneinander beabstandeten, und zur Produktionslinie gerichteten Düsenöffnungen ausgebildet ist. Durch die zur Produktionslinie, d.h. zum Mehrschicht-Verbundrohr orientierten Düsenöffnungen wird erreicht, daß die Kühlflüssigkeit bereits während des Befüllens des Flüssigkeitsbades gegen den Anfahr- d.h. Anfangsabschnitt des Mehrschicht-Verbundrohres gerichtet ist, um eine entsprechende Kühlung zu bewirken. Mit Hilfe der Verbundrohr-Niederhaltereinrichtungen wird das Mehrschicht-Verbundrohr im länglichen Flüssigkeitsbad der Kühleinrichtung definiert positioniert, d.h. ein Aufschwimmen des Mehrschicht-Verbundrohres im Flüssigkeitsbad verhindert. Ein solches Aufschwimmen würde ohne die Verbundrohr-Niederhaltereinrichtungen durch den Auftrieb des Mehrschicht-Verbundrohres bewirkt. Dieser Auftrieb resultiert aus der Tatsache, daß sich im Inneren des Mehrschicht-Verbundrohres ein entsprechender Überdruck befindet. Dieser Überdruck ist notwendig, um das Metallrohr mit der haftfesten Kunststoff-Innenschicht präzise auszubilden.

Die jeweilige Verbundrohr-Niederhaltereinrichtung kann zwei voneinander beabstandete, an einem Schwenkhebel gelagerte Rollen aufweisen. Eine derartige, an sich bekannte Ausbildung, ergibt den Vorteil, daß Metallschicht-Verbundrohre mit unterschiedlichen Nenndurchmessern ohne weiteres im länglichen Flüssigkeitsbad der Kühleinrichtung genau richtig positioniert werden.

Der oben erwähnte Überdruck im Inneren des Mehrschicht-Verbundrohres kann in an sich bekannter Weise durch einen Dorn bewirkt werden, wie er bspw. in der EP 0 581 208 B1 beschrieben ist. Bei der erfindungsgemäßen Anlage hat es sich als zweckmäßig erwiesen, im Flüssigkeitsbad eine entlang des Flüssigkeitsbades hin- und herfahrbare Rohrabklemmeinrichtung mit Abquetschbacken vorzusehen, und am Badanfang des Flüssigkeitsbades eine erste Betätigungseinrichtung zum Schließen und zum Geschlossenhalten der Abquetschbacken und am Badende des länglichen Flüssigkeitsbades eine zweite Betätigungseinrichtung zum öffnen und zum Offenhalten der Abquetschbacken vorzusehen. Mit Hilfe der Abquetschbacken der Rohrabklemmeinrichtung wird das in der Anlage hergestellte Mehrschicht-Verbundrohr an einer bestimmten Stelle abgequetscht, wobei das Rohrinnere durch die an dieser Stelle noch plastische Kunststoff-Innenschicht verschlossen wird. Damit ist im Rohrinneren ein entsprechender Überdruck realisierbar. Die Rohrabklemmeinrichtung mit den Abquetschbacken kann bei der erfindungsgemäßen Anlage elektromotorisch im länglichen Flüssigkeitsbad hin- und hergefahren werden. Die Hinfahrt zwischen der ersten und der zweiten Betätigungseinrichtung erfolgt hierbei an die Vorschubgeschwindigkeit des in der Anlage hergestellten Mehrschicht-Verbundrohres angepaßt. Die Rückfahrt von der zweiten Betätigungseinrichtung zur ersten Betätigungseinrichtung kann auch mit einer größeren Geschwindigkeit erfolgen.

Zweckmäßig ist es bei der erfindungsgemäßen Anlage, wenn in Produktionsrichtung stromabwärts nach der Kühleinrichtung eine optische Rohrkontrolleinrichtung, ein Drucker, eine Rohrabzugeinrichtung und eine Rohraufwickeleinrichtung vorgesehen sind. Die optische Außenrohr-Kontrolleinrichtung kann eine Anzahl Videokameras aufweisen. Diese Videokameras sind mit einer Steuerungseinrichtung der erfindungsgemäßen Anlage derartig kombiniert und zusammengeschaltet, daß die Anlage unverzüglich angehalten wird, wenn die Videokameras am hergestellten Mehrschicht-Verbundrohr Produktionsmängel detektieren.

Die erfindungsgemäße Anlage ist relativ einfach und zeitsparend präzise aufstellbar, wenn eine zweiteilige Grundeinrichtung mit einem ersten und einem zweiten Grundteil vorgesehen ist, wobei auf dem ersten Grundteil die Metallstreifen-Abwickeleinrichtung, die Metallstreifen-Speichereinrichtung und die Extruderstation angeordnet sind, auf dem zweiten Grundteil die optische Rohrkontrolleinrichtung, der Drucker, die Rohrabzugeinrichtung und die Rohraufwickeleinrichtung vorgesehen sind, und das erste und das zweite Grundteil miteinander mittels der Kühleinrichtung verbunden sind. Das erste und das zweite Grundteil können als Grundplatten mit geeigneten Hohlräumen bzw. Schächten - quasi wie Paletten - ausgebildet sein, um auch zur Aufnahme der Installationsmaterialien der erfindungsgemäßen Anlage zu dienen.

Weitere Einzelheiten, Merkmale und Vorteile ergeben sich aus der nachfolgenden Beschreibung eines in der Zeichnung dargestellten Ausführungsbeispieles der erfindungsgemäßen Anlage zum Herstellen von Mehrschicht-Verbundrohren. Es zeigen:
- Figur 1: eine Ausbildung der Anlage in einer Seitenansicht,
- Figur 2: die Anlage gemäß Figur 1 in einer Ansicht von oben,
- Figur 3: eine Ausbildung der Metallstreifen-Speichereinrichtung der Anlage gemäß den Figuren 1 und 2 in einer Seitenansicht,
- Figur 4: eine Draufsicht auf die Metallstreifen-Speichereinrichtung gemäß Figur 3,
- Figur 5: aufgeschnitten eine Ansicht der Metallstreifen-Speichereinrichtung gemäß den Figuren 3 und 4 in einer Frontansicht,
- Figur 6: eine Ansicht der Metallstreifen-Speichereinrichtung in Blickrichtung der Pfeile VI-VI in Figur 3,
- Figur 7: teilweise aufgeschnitten abschnittweise eine Ausbildung wesentlicher Teile einer Umform-Einrichtung der Anlage gemäß den Figuren 1 und 2 in einer Seitenansicht,
- Figur 8: einen Schnitt entlang der Schnittlinie VIII-VIII in Figur 7,
- Figur 9: einen Schnitt entlang der Schnittlinie IX-IX in Figur 7,
- Figur 10: eine erste Schließrolleneinrichtung der Anlage gemäß den Figuren 1 und 2 in einer Schnittdarstellung,
- Figur 11: in einer der Figur 10 ähnlichen Schnittdarstellung eine zweite Schließrolleneinrichtung der Anlage gemäß den Figuren 1 und 2,
- Figur 12: in einer Frontansicht eine Ausbildung einer in einem Flüssigkeitsbad der Anlage gemäß den Figuren 1 und 2 vorgesehenen Rohrabklemmeinrichtung mit Abquetschbacken, die mit durchgezogenen Linien in der geschlossenen Abquetschstellung und mit strichlierten Linien in der geöffneten Rücktransportstellung dargestellt sind,
- Figur 13: eine Draufsicht auf ein erstes Grundteil einer zweiteiligen Grundeinrichtung der Anlage gemäß den Figuren 1 und 2,
- Figur 14: eine Ansicht des Grundteiles gemäß Figur 13 in Blickrichtung des Pfeiles XIV, und
- Figur 15: teilweise aufgeschnitten eine Ansicht des zweiten Grundteiles gemäß Figur 13 in Blickrichtung des Pfeiles XV.

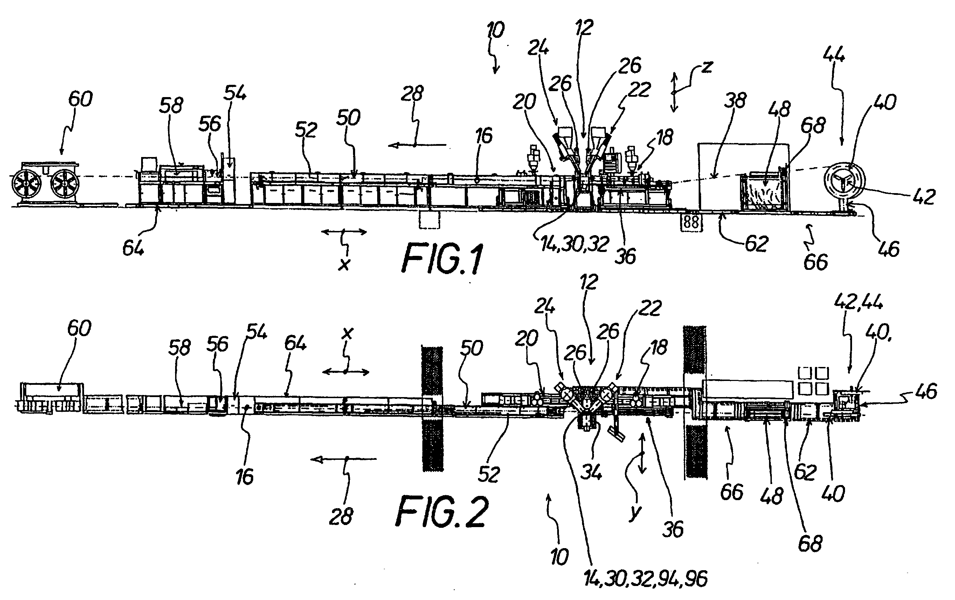

Die Figuren 1 und 2 zeigen eine Ausbildung der Anlage 10 zum Herstellen von Mehrschicht-Verbundrohren in einer Seitenansicht und in einer Ansicht von oben. Die Anlage 10 weist eine Extruderstation 12 auf, die das Herzstück der Anlage 10 bildet. Die Extruderstation 12 weist einen ortsfesten Extrusionskopf 14 auf, der einen Ort einer durch eine strichpunktierte Linie angedeuteten Produktionslinie 16 der Anlage 10 bestimmt. Dem Extrusionskopf 14 ist ein erster Extruder 18 und ein zweiter Extruder 20 zugeordnet. Der erste Extruder 18 dient zur Herstellung einer Kunststoff-Innenschicht und der zweite Extruder dient zur Herstellung einer Kunststoff-Außenschicht an einem Metallrohr. Der erste und der zweite Extruder 18 und 20 sind seitlich neben der Produktionslinie 16 zu dieser parallel vorgesehen und einander zugewandt angeordnet. Der Extrusionskopf 14 befindet sich mittig und seitlich versetzt zwischen dem ersten und dem zweiten Extruder 18 und 20. Wie aus Figur 2 ersichtlich ist, ist eine solche Anordnung platz- und grundflächensparend.

Um die Kunststoff-Innenschicht und die Kunststoff-Außenschicht am Metallrohr festhaftend anzubringen, weist die Extruderstation 12 einen dritten Extruder 22 und einen vierten Extruder 24 für Haftvermittler auf, die wie der erste und der zweite Extruder 18 und 20 mit dem ortsfest vorgesehenen Extrusionskopf 14 der Extruderstation 12 verbunden sind. Der dritte und der vierte Extruder 22 und 24 sind an zugehörigen Säulenelementen 26 kardanisch angebracht und somit einfach präzise in bezug zum Extrusionskopf 14 einstellbar. Der dritte und der vierte Extruder 22 und 24 befinden sich auf der gleichen Seite der Produktionslinie 16 wie der erste und der zweite Extruder 18 und 20, so daß der Zugang zum Extrusionskopf 14 in vorteilhafter Weise problemlos möglich ist.

Die Produktionsrichtung der Anlage 10 ist in den Figuren 1 und 2 durch den Pfeil 28 verdeutlicht. Dem Extrusionskopf 14 ist eine Schweißeinrichtung 30 einer Schweißstation 32 zugeordnet, die ein Ultraschall-Schweißrad aufweist, das durch einen Antriebsmotor 34 gesteuert angetrieben wird.

Das Ultraschall-Schweißrad ist in bezug zum Extrusionskopf 14 in einer zur Produktionslinie 16 parallelen ersten Raumrichtung x und in einer zur ersten Raumrichtung x senkrechten zweiten Raumrichtung y wunschgemäß verstellbar. Die durch den Doppelpfeil x verdeutlichte erste Raumrichtung liegt in der Zeichnungsebene der Figur 1 und in der Zeichnungsebene der Figur 2. Die dazu senkrechte zweite Raumrichtung y liegt in der Zeichnungsebene der Figur 2 und ist zur Zeichnungsebene der Figur 1 senkrecht orientiert. Die zweite Raumrichtung y ist also in einer Horizontalebene quer zur Produktionslinie 16 orientiert. In Figur 1 ist eine zur ersten und zur zweiten Raumrichtung x und y senkrechte, lotrechte Raumrichtung z durch einen entsprechenden Doppelpfeil verdeutlicht. Die dritte Raumrichtung z ist zur Zeichnungsebene der Figur 2 senkrecht orientiert und liegt in der Zeichnungsebene der Figur 1. Das Ultraschall-Schweißrad der Schweißeinrichtung 30 ist nicht nur in der ersten Raumrichtung x und in der zweiten Raumrichtung y linear verstellbar, wie bereits ausgeführt worden ist, sondern außerdem auch um eine in der zweiten Raumrichtung y orientierte Schwenkachse wunschgemäß verschwenkbar. Die Schweißeinrichtung 30 ist also in vorteilhafter Weise sehr beweglich vorgesehen und folglich sehr exakt an der Produktionslinie 16 anordenbar.

In der durch den Pfeil 28 angedeuteten Produktionsrichtung stromaufwärts vor der Schweißstation 32 ist eine Metallstreifen-Umformeinrichtung 36 vorgesehen, die dazu dient, einen Metallstreifen 38 (sh. Figur 1) zu einem Metallrohr umzuformen. Der umzuformende Metallstreifen 38 wird von einer Spule 40 abgewickelt, die an einer Spulenaufnahme 42 einer Metallstreifen-Abwickeleinrichtung 44 vorgesehen ist. Die Metallstreifen-Abwickeleinrichtung 44 weist ein Standelement 46 auf, das zwei Spulenaufnahmen 42 besitzt. Die beiden Spulenaufnahmen 42 liegen sich diametral gegenüber, wie aus Figur 2 ersichtlich ist. Die eine Spulenaufnahme 42 befindet sich in der Produktionslinie 16 und die zweite Spulenaufnahme befindet sich außerhalb der Produktionslinie 16 und kann während des Abspulens der in der Produktionslinie 16 befindlichen Metallstreifenspule mit einer ungebrauchten neuen Metallstreifenspule bestückt werden. Das Standelement 46 der Metallstreifen-Abwickeleinrichtung 44 ist in der zweiten Raumrichtung y einstellbar, um eine Ausrichtung der entsprechenden Spulenaufnahme 42 in bezug zur Produktionslinie 16 zu bewerkstelligen.

Zwischen der Metallstreifen-Abwickeleinrichtung 44 und der Umformeinrichtung 36 befindet sich eine Metallstreifen-Speichereinrichtung 48. Wie aus Figur 1 ersichtlich ist, ist die Metallstreifen-Speichereinrichtung 48 dazu vorgesehen, insbesondere einen Endabschnitt einer verbrauchten Metallstreifenspule 40 zwischenzuspeichern, eine ungebrauchte neue Metallstreifenspule in der Produktionslinie 16 anzuordnen und den Wickelanfang der ungebrauchten neuen Metallstreifenspule mit dem Ende der verbrauchten Metallstreifenspule mechanisch fest zu verbinden, ohne die Anlage 10 anhalten zu müssen. Während dieser Verbindung der besagten Streifenenden wird der entsprechende Abschnitt des Metallstreifens 38 aus der Metallstreifen-Speichereinrichtung 48 entnommen.

Stromabwärts nach der Extruderstation 12 weist die Anlage 10 eine Kühleinrichtung 50 mit einem länglichen Flüssigkeitsbad 52 auf. Dem Flüssigkeitsbad 52 der Kühleinrichtung 50 ist in Produktionsrichtung 28 stromabwärts eine optische Rohrkontrolleinrichtung 54, ein Drucker 56, eine Rohrabzugeinrichtung 58 und eine Rohraufwickeleinrichtung 60 nachgeordnet.

Die Metallstreifen-Abwickeleinrichtung 46, die Metallstreifen-Speichereinrichtung 48 und die Extruderstation 12 sind auf einem ersten Grundteil 62 angeordnet. Die optische Rohrkontrolleinrichtung 54, der Drucker 56, die Rohrabzugeinrichtung 58 und die Rohraufwickeleinrichtung 60 sind auf einem zweiten Grundteil 64 angeordnet. Das erste und das zweite Grundteil 62 und 64 bilden eine zweiteilige Grundeinrichtung 66. Das erste und das zweite Grundteil 62 und 64 sind voneinander beabstandet und miteinander durch die Kühleinrichtung 50 verbunden.

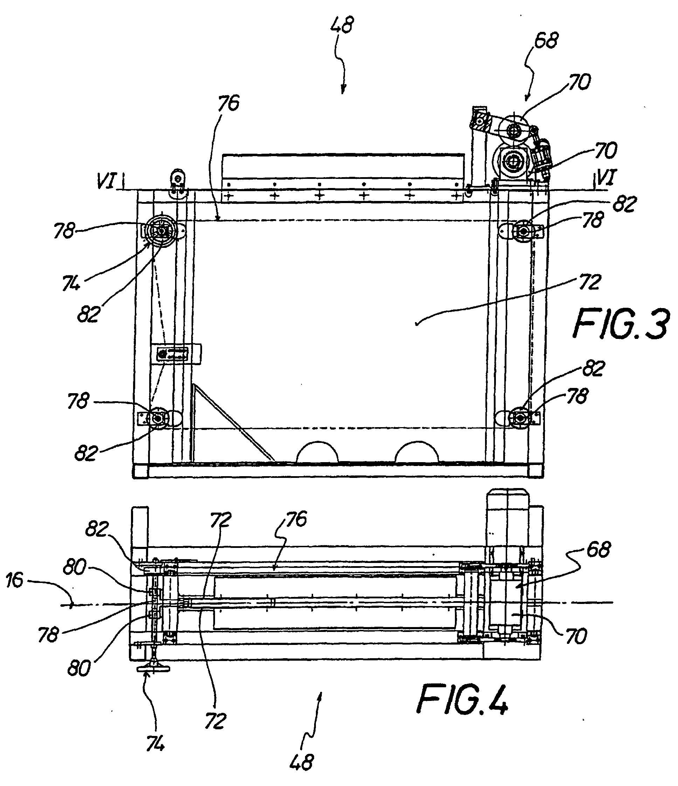

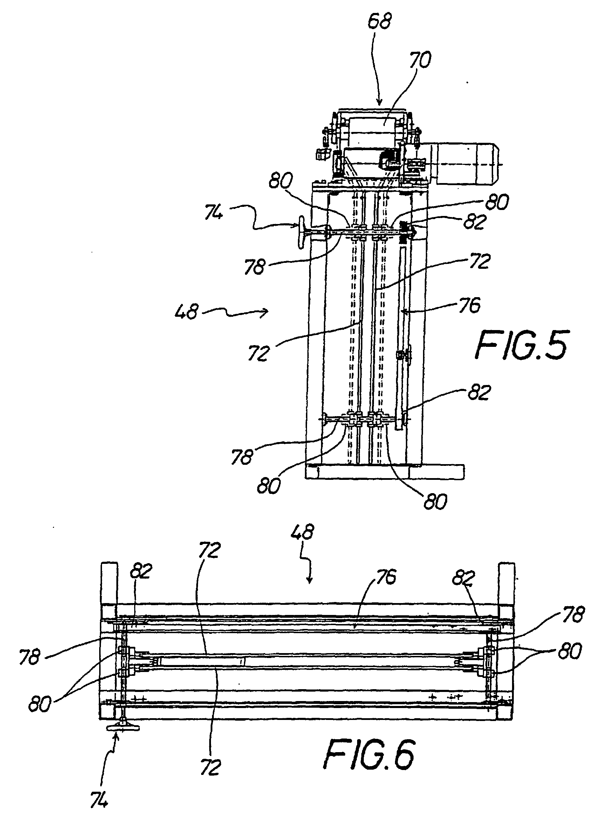

Die Figuren 3, 4, 5 und 6 zeigen eine Ausbildung der Metallstreifen-Speichereinrichtung 48 mit einer Antriebs-bzw. Bremseinrichtung 68 mit zwei Walzen 70, zwischen welchen der zu einem Metallrohr umzuformende Metallstreifen 38 (sh. Figur 1) definiert hindurchbewegt wird. Die Metallstreifen-Speichereinrichtung 48 weist zwei zueinander parallele vertikale Seitenwände 72 auf, die simultan spiegelbildlich zur Produktionslinie 16 verstellbar sind (sh. Figur 4), um den lichten Abstand zwischen den beiden Seitenwänden 72 an die Breite des jeweiligen Metallstreifens 38 anzupassen. Zur wunschgemäßen definierten Verstellung der beiden Seitenwände 72 dient ein Handrad 74, das mit einem endlosen Riemen 76 verbunden ist. Der endlose Riemen 76 ist um vier Schraubspindeln 78 umgelenkt, die jeweils ein Rechtsgewinde und davon beabstandet ein Linksgewinde besitzen. Der Rechtsgewindeabschnitt und der Linksgewindeabschnitt sind jeweils durch ein zugehöriges, an der entsprechenden Seitenwand 72 befestigtes Mutterelement 80 durchgeschraubt. Bei dem endlosen Riemen 76 handelt es sich bspw. um einen Zahnriemen, der um Zahnräder 82 umgelenkt ist, die an den Schraubspindeln 78 befestigt sind. Wird das Handrad 74 gedreht, so werden die Schraubspindeln 78 mittels des endlosen Riemens 76 simultan angetrieben, wobei sich eine Schraubbewegung der Schraubspindeln 78 durch die Mutterelemente 80 hindurch und folglich eine simultane Bewegung der beiden vertikalen Seitenwände 72 der Metallstreifen-Speichereinrichtung 48 aufeinander zu oder voneinander weg ergibt. Der Seitenabstand der beiden Seitenwände 72 zur mittigen Produktionslinie 16 bleibt also konstant, d.h. die Produktionslinie 16 befindet sich unabhängig vom jeweiligen lichten Abstand der beiden Seitenwände 72 genau in der Mitte zwischen den beiden Seitenwänden 72.

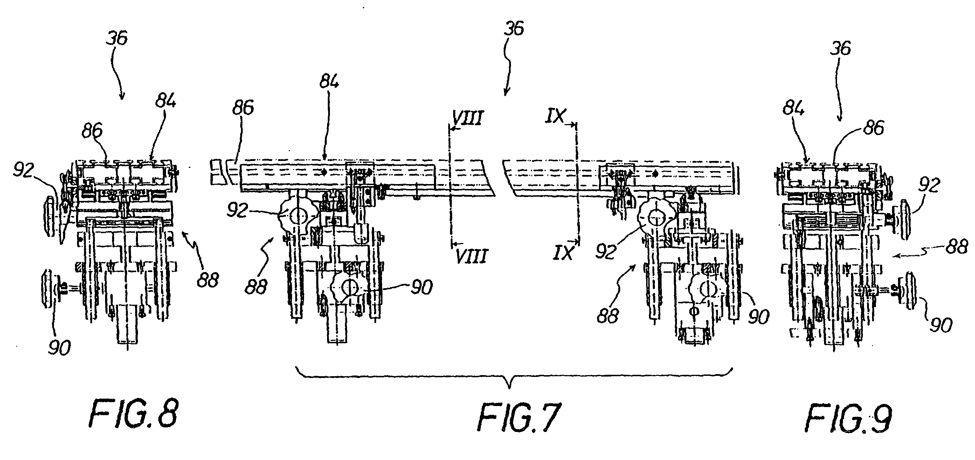

Die Figuren 7, 8 und 9 verdeutlichen eine Ausbildung eines Grundelementes 84 der Umformeinrichtung 36 der Anlage 10. Das Grundelement 84 weist ein in Figur 7 abgeschnitten gezeichnetes Profilelement 86 mit Längsrillen 88 auf (sh. die Figuren 8 und 9). Auf dem Grundelement 84 sind in an sich bekannter Weise (nicht gezeichnete) Umform-Rollenpaare in der ersten Raumrichtung x verstellbar angeordnet. Das Grundelement 84 ist an Lagereinrichtungen 88 vorgesehen. Jede der beiden Lagereinrichtungen 88 weist ein Handrad 90 zur Einstellung des Grundelementes 84 in der dritten Raumrichtung z und ein Handrad 92 zur Einstellung des Grundelementes 84 in der zweiten Raumrichtung y auf, wobei durch geeignete Betätigung des einen und/oder des anderen Handrades 90, 92 der einen und/oder der anderen Lagereinrichtung 88 nicht nur eine lineare Einstellung in der zweiten und/oder in der dritten Raumrichtung y und/oder z möglich ist, sondern das Grundelement 84 der Umformeinrichtung 36 auch um eine in der zweiten Raumrichtung y orientierte Schwenkachse und/oder um eine in der dritten Raumrichtung z orientierte Schwenkachse wunschgemäß verschwenkt werden kann, um eine exakte Ausrichtung des Grundelementes 84 in bezug zur Produktionslinie 16 zu ermöglichen.

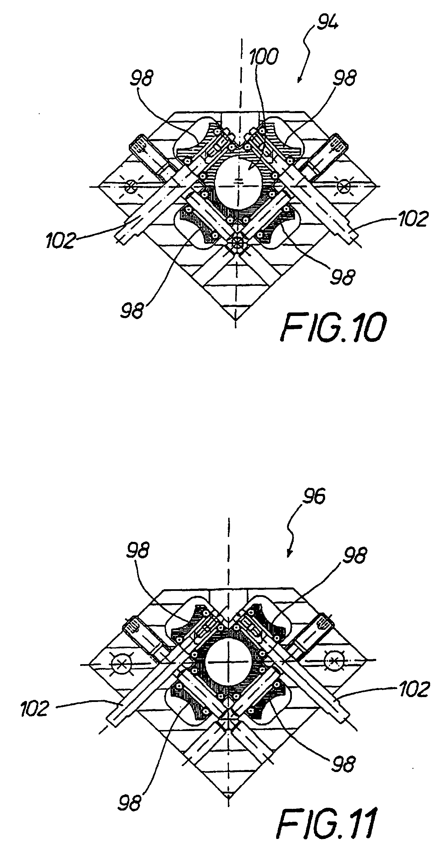

Figur 10 zeigt in einer Schnittdarstellung eine Ausbildung einer zur Schweißeinrichtung 30 der Anlage 10 benachbarten Schließrolleneinrichtung 94. Die Figur 11 zeigt in einer der Figur 10 ähnlichen Schnittdarstellung eine zweite Schließrolleneinrichtung 96, die in Produktionsrichtung nach der ersten Schließrolleneinrichtung 94 in der Produktionslinie 16 angeordnet ist. Jede der beiden Schließrolleneinrichtungen 94 und 96 weist Schließrollen 98 auf, die aneinander angrenzen. Die Schließrollen 98 der ersten Schließrolleneinrichtung 94 legen eine an die Spiralform des Metallrohr-Vorformlings angepaßte Spiralkontur 100 fest. Die Schließrollen 98 der zweiten Schließrolleneinrichtung 96 definieren den Außendurchmesser des zum Metallrohr umgeformten Metallstreifens 38 mit sich überlagernden Längsrändern. Ein Teil der Schließrollen 98 der ersten und der zweiten Schließrolleneinrichtung 94 und 96 sind in bezug zur Produktionslinie 16 radial verstellbar. Zu diesem Zwecke sind sie an Einstellachsen 102 exzentrisch gelagert.

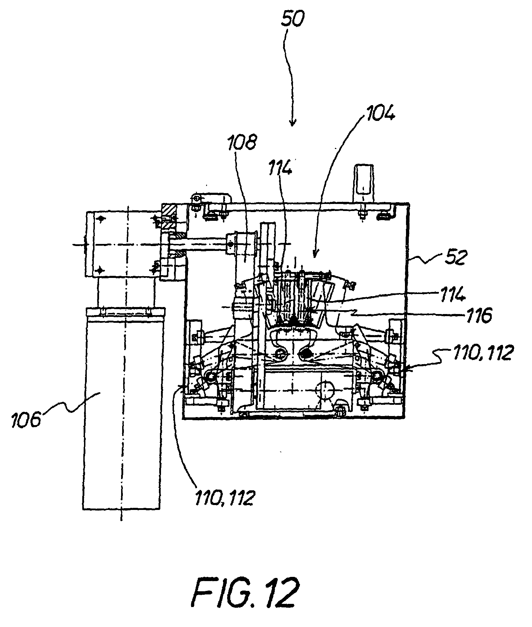

Figur 12 zeigt aufgeschnitten in einer Stirnansicht das Flüssigkeitsbad 52 der Kühleinrichtung 50. Im länglichen Flüssigkeitsbad 52 ist eine Rohrabklemmeinrichtung 104 angeordnet, die in Längsrichtung des Flüssigkeitsbades 52, d.h. zur Zeichnungsebene der Figur 12 senkrecht, hin und her verfahrbar ist. Zur diesem Zwecke ist die Rohrabklemmeinrichtung 104 mit einem Antrieb 106 über ein endloses Antriebsband 108 verbunden. Am Badanfang des länglichen Flüssigkeitsbades 52 ist eine erste Betätigungseinrichtung 110 angeordnet. Am Ende des länglichen Flüssigkeitsbades 52 ist eine zweite Betätigungseinrichtung 112 angeordnet. Die erste Betätigungseinrichtung 110 ist dazu vorgesehen, die Abquetschbacken 114 der Rohrabklemmeinrichtung 104 in der Produktionslinie 16 gegeneinander zu bewegen, um das zwischen ihnen befindliche Metall-Verbundrohr 116 abzuquetschen und zu verschließen. Die Abquetschbacken 114 bleiben dann geschlossen, d.h. sie bewegen sich mit dem entlang der Produktionslinie 16 sich vorwärtsbewegenden Metall-Verbundrohr mit diesem verklemmt. Erreicht die Rohrabklemmeinrichtung 104 am Ende des länglichen Flüssigkeitsbades 52 die zweite Betätigungseinrichtung 52, so werden mit deren Hilfe die Abquetschbacken 114 der Rohrabklemmeinrichtung 104 geöffnet, wonach sich die Rohrabklemmeinrichtung 104 mit Hilfe des Antriebes 106 wieder in ihre Ausgangsposition, d.h. zum Anfang des länglichen Flüssigkeitsbades 52, zurückbewegt wird. Die Rohrabklemmeinrichtung 104 führt also gleichsam eine Pilgerschrittbewegung durch.

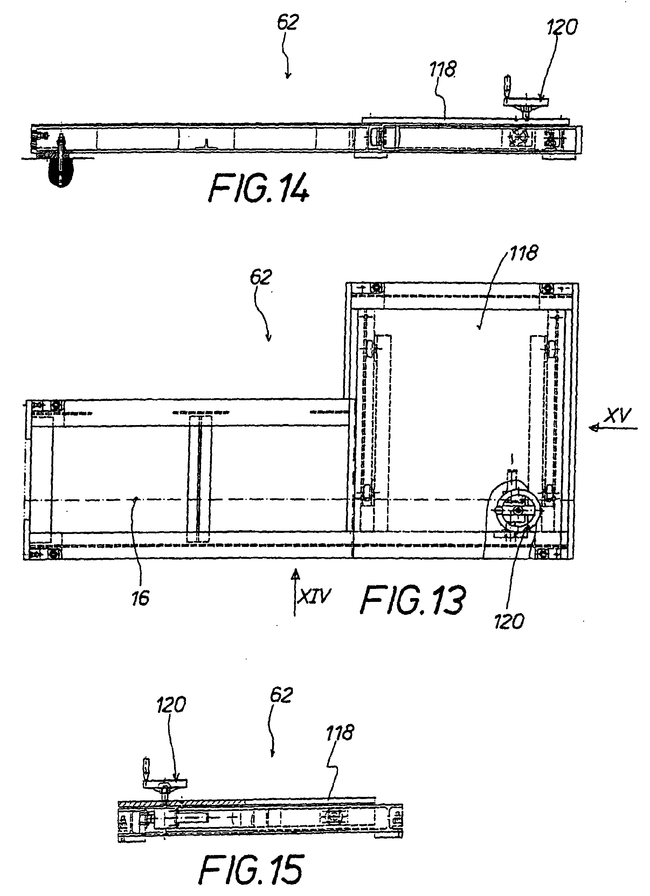

Die Figuren 13, 14 und 15 zeigen eine Ausbildung des ersten Grundteiles 62 der zweiteiligen Grundeinrichtung 66 der Anlage 10 gemäß den Figuren 1 und 2. Auf dem Grundteil 62 ist eine Grundplatte 118 in der zweiten Raumrichtung y mit Hilfe eines Handrades 120 wunschgemäß definiert verstellbar, um das auf der Grundplatte 118 befestigte Standelement 46 der Metallstreifen-Abwickeleinrichtung 44 (sh. die Figuren 1 und 2), d.h. die entsprechende Seite 40 exakt zur Produktionslinie 16 auszurichten.

## Patentansprüche

1. Anlage zum Herstellen von Mehrschicht-Verbundrohren (16), mit einer Umformeinrichtung (36) zum Umformen eines Metallstreifens (38) zu einem Metallrohr mit sich überlappenden Längsrändem, mit einer Schweißeinrichtung (30) zum Verschweißen der sich überlappenden Längsränder, mit einer Extruderstation (12) mit einem an die Umformeinrichtung (36) angrenzenden Extrusionskopf (14), der mit einem ersten Extruder (18) zum Anbringen einer Kunststoff-Innenschicht und mit einem zweiten Extruder (20) zum Anbringen einer Kunststoff-Außenschicht am Metallrohr verbunden ist, und mit einer Kühleinrichtung (50) zum Abkühlen des hergestellten Mehrschicht-Verbundrohres (116), wobei der Extrusionskopf (14) der Extruderstation (12) ortsfest vorgesehen ist, und der erste und der zweite Extruder (18 und 20) in einer Linie miteinander fluchtend einander zugewandt seitlich neben dem Extrusionskopf (14), zur Produktionslinie (16) parallel, angeordnet sind, wobei der in der Produktionslinie (16) befindliche Extrusionskopf (14) zwischen dem ersten und dem zweiten Extruder (18, 20) vorgesehen ist,
**dadurch gekennzeichnet,**
**daß** ein dritter und ein vierter Extruder (22 und 24) für Haftvermittler an zugehörigen ortsfesten Säuleneinrichtungen (26) kardanisch angebracht sind, wobei der dritte Extruder (22) dem ersten Extruder (18) und der vierte Extruder (24) dem zweiten Extruder (20) zugeordnet ist.

2. Anlage nach Anspruch 1,
**dadurch gekennzeichnet,**
**daß** die Schweißeinrichtung (30) eine Schweißstation (32) mit einem Ultraschall-Schweißrad aufweist, wobei die Schweißstation (32) in einer zur Produktionslinie (16) parallelen ersten Raumrichtung (x), in einer dazu senkrechten zweiten Raumrichtung (y) quer zur Produktionslinie (16) und in einer zur ersten und zur zweiten Raumrichtung (x und y) senkrechten dritten Raumrichtung (z) in bezug zum Extrusionskopf (14) verstellbar und um eine in der ersten Raumrichtung (x) orientierte Schwenkachse verschwenkbar ist.

3. Anlage nach Anspruch 2,
**dadurch gekennzeichnet,**
**daß** das Ultraschall-Schweißrad zu seinem gesteuerten Drehantrieb mit einem Antriebsmotor (34) verbunden ist.

4. Anlage nach einem der vorhergehenden Ansprüche,
**dadurch gekennzeichnet,**
**daß** zur Schweißeinrichtung (30) zwei Schließrolleneinrichtungen (94, 96) benachbart sind, die jeweils mehr als zwei am Umfang verteilte und aneinander angrenzende Schließrollen (98) aufweisen.

5. Anlage nach Anspruch 4,
**dadurch gekennzeichnet,**
**daß** mindestens zwei der Schließrollen (98) der jeweiligen Schließrolleneinrichtung (94, 96) radial einstellbar sind.

6. Anlage nach einem der vorhergehenden Ansprüche,
**dadurch gekennzeichnet,**
**daß** die Umformeinrichtung (36) ein Grundelement (84) aufweist, auf dem Umform-Rollenpaare in Vorschubrichtung des umzuformenden Metallstreifens (38) voneinander beabstandet hintereinander angeordnet sind, wobei das Grundelement (84) in der zweiten Raumrichtung (y) quer zur Produktionslinie (16) und in der dritten Raumrichtung (z) vertikal verstellbar und um eine in der zweiten Raumrichtung (y) orientierte Schwenkachse und um eine in der dritten Raumrichtung (z) orientierte Schwenkachse verschwenkbar ist.

7. Anlage nach Anspruch 6,
**dadurch gekennzeichnet,**
**daß** zur Verstellung in der zweiten Raumrichtung (y) und um die in der zweiten Raumrichtung (y) orientierte Schwenkachse sowie zur Verstellung in der dritten Raumrichtung (z) und um die in der dritten Raumrichtung (z) orientierte Schwenkachse Einstellräder (90, 92) vorgesehen sind.

8. Anlage nach einem der vorhergehenden Ansprüche,
**dadurch gekennzeichnet,**
**daß** der Umformeinrichtung (36) in Produktionsrichtung stromaufwärts eine Metallstreifen-Abwickeleinrichtung (44) vorgeordnet ist, die in der zweiten Raumrichtung (y) quer zur Produktionslinie (16) verstellbar ist.

9. Anlage nach Anspruch 8,
**dadurch gekennzeichnet,**
**daß** die Metallstreifen-Abwickeleinrichtung (44) ein Standelement (46) mit zwei Spulenaufnahmen (42) aufweist, wobei das Standelement (46) um eine Vertikalachse drehbar ist, und die beiden Spulenaufnahmen (42) an voneinander abgewandten Seiten des Standelementes (46) vorgesehen sind.

10. Anlage nach Anspruch 8,
**dadurch gekennzeichnet,**
**daß** zwischen der Metallstreifen-Abwickeleinrichtung (44) und der Metallstreifen-Umformeinrichtung (36) eine Metallstreifen-Speichereinrichtung (48) vorgesehen ist, die zwei vertikale, zueinander und zur Produktionslinie (16) parallel angeordnete Seitenwände (72) aufweist.

11. Anlage nach Anspruch 10,
**dadurch gekennzeichnet,**
**daß** die beiden Seitenwände (72) der Metallstreifen-Speichereinrichtung (48) simultan zur Produktionslinie (16) spiegelbildlich symmetrisch verstellbar sind.

12. Anlage nach einem der vorhergehenden Ansprüche,
**dadurch gekennzeichnet,**
**daß** die Kühleinrichtung (50) ein längliches Flüssigkeitsbad (52) mit einer Düseneinrichtung und mit Verbundrohr-Niederhaltereinrichtungen aufweist, wobei die Düseneinrichtung mit voneinander beabstandeten, zur Produktionslinie (16) gerichteten Düsenöffnungen ausgebildet ist.

13. Anlage nach Anspruch 12,
**dadurch gekennzeichnet,**
**daß** die jeweilige Verbundrohr-Niederhaltereinrichtung zwei voneinander beabstandete, an einem Schwenkhebel gelagerte Rollen aufweist.

14. Anlage nach Anspruch 12,
**dadurch gekennzeichnet,**
**daß** im Flüssigkeitsbad (52) eine entlang des Flüssigkeitsbades (52) hinund herfahrbare Rohrabklemmeinrichtung (104) mit Abquetschbacken (114) vorgesehen ist, und daß am Badanfang des Flüssigkeitsbades (52) eine erste Betätigungseinrichtung (110) zum Schließen und zum Geschlossenhalten der Abquetschbacken (114) und am Badende des Flüssigkeitsbades (52) eine zweite Betätigungseinrichtung (112) zum Öffnen und zum Offenhalten der Abquetschbacken (114) vorgesehen ist.

15. Anlage nach einem der vorhergehenden Ansprüche,
**dadurch gekennzeichnet,**
**daß** in Produktionsrichtung (28) stromabwärts nach der Kühleinrichtung (50) eine optische Rohrkontrolleinrichtung (54), ein Drucker (56), eine Rohrabzugeinrichtung (58) und eine Rohraufwickeleinrichtung (60) vorgesehen sind.

16. Anlage nach Anspruch 15,
**dadurch gekennzeichnet,**
**daß** die optische Rohrkontrolleinrichtung (54) eine Anzahl Videokameras aufweist.

17. Anlage nach einem der vorhergehenden Ansprüche,
**dadurch gekennzeichnet,**
**daß** eine zweiteilige Grundeinrichtung (66) mit einem ersten Grundteil (62) und mit einem zweiten Grundteil (64) vorgesehen ist, wobei auf dem ersten Grundteil (62) die Metallstreifen-Abwickeleinrichtung (44), die Metallstreifen-Speichereinrichtung (48) und die Extruderstation (12) angeordnet sind, auf dem zweiten Grundteil (64) die optische Rohrkontrolleinrichtung (54), der Drucker (56), die Rohrabzugeinrichtung (58) und die Rohraufwickeleinrichtung (60) angeordnet sind, und das erste und das zweite Grundteil (62, 64) miteinander mittels der Kühleinrichtung (50) verbunden sind.

## Claims

1. Plant for producing multilayer composite pipes (16), having a forming device (36) for forming a metal strip (38) into a metal pipe with overlapping longitudinal edges, having a welding device (30) for welding the overlapping longitudinal edges, having an extruder station (12) with an extrusion head (14) which adjoins the forming device (36) and is connected to a first extruder (18) for applying a plastic inner layer and to a second extruder (20) for applying a plastic outer layer to the metal pipe, and having a cooling device (50) for cooling the multilayer composite pipe (116) produced, the extrusion head (14) of the extruder station (12) being provided in a fixed position, and the first and the second extruder (18 and 20) being arranged in alignment with one another and facing one another laterally next to the extrusion head (14) and parallel to the production line (16), the extrusion head (14) being located in the production line (16) between the first and the second extruder (18, 20), **characterized in that** a third and a fourth extruder (22 and 24) for adhesive agent are gimbal mounted to associated fixed column devices (26), the third extruder (22) being assigned to the first extruder (18) and the fourth extruder (24) being assigned to the second extruder (20).

2. Plant according to Claim 1, **characterized in that** the welding device (30) has a welding station (32) with an ultrasonic welding wheel, the welding station (32) being adjustable with respect to the extrusion head (14) in a first spatial direction (x) parallel to the production line (16), in a second spatial direction (y) perpendicular to the production line (16), and in a third spatial direction (z) perpendicular to the first and the second spatial direction (x and y) and being pivotable about a pivot axis oriented in the first spatial direction (x).

3. Plant according to Claim 2, **characterized in that** the ultrasonic welding wheel .is connected to a drive motor (34) for its controlled rotary drive.

4. Plant according to any one of the preceding claims, **characterized in that** two closing roller devices (94, 96) are adjacent to the welding device (30), these closing roller devices (94, 96) each having more than two closing rollers (98) distributed at the circumference and adjoining one another.

5. Plant according to Claim 4, **characterized in that** at least two of the closing rollers (98) of the respective closing roller device (94, 96) are radially adjustable.

6. Plant according to any one of the preceding claims, **characterized in that** the forming device (36) has a base element (84), on which forming roller pairs are arranged one behind the other at a distance apart in the feed direction of the metal strip (36) to be formed, the base element (84) being adjustable transversely to the production line (16) in the second spatial direction (y) and being vertically adjustable in the third spatial direction (z) and being pivotable about a pivot axis oriented in the second spatial direction (y) and about a pivot axis oriented in the third spatial direction (z).

7. Plant according to Claim 6, **characterized in that** adjusting wheels (90, 92) are provided for the adjustment in the second spatial direction (y) and about the pivot axis oriented in the second spatial direction (y) and also for the adjustment in the third spatial direction (z) and about the pivot axis oriented in the third spatial direction (z).

8. Plant according to any one of the preceding claims, **characterized in that** a metal-strip unwinding device (44) is arranged upstream of the forming device (36) in the production direction and is adjustable in the second spatial direction (y) transversely to the production line (16).

9. Plant according to Claim 8, **characterized in that** the metal-strip unwinding device (44) has an upright element (46) with two coil receptacles (42), the upright element (46) being rotatable about a vertical axis, and the two coil receptacles (42) being provided on sides of the upright element (46) facing away from one another.

10. Plant according to Claim 8, **characterized in that** a metal-strip storage device (48) is provided between the metal-strip unwinding device (44) and the metal-strip forming device (36) and has two vertical side walls (72) arranged parallel to one another and to the production line (16).

11. Plant according to Claim 10, **characterized in that** the two side walls (72) of the metal-strip storage device (48) are simultaneously adjustable symmetrically in mirror image with respect to the production line (16).

12. Plant according to any one of the preceding claims, **characterized in that** the cooling device (50) has an elongated liquid bath (52) with a nozzle device and with hold-down devices for the composite pipe, the nozzle device being designed with spaced-apart nozzle openings directed towards the production line (16).

13. Plant according to Claim 12, **characterized in that** the respective hold-down devices for the composite pipe have two spaced-apart rollers mounted on a pivoted lever.

14. Plant according to Claim 12, **characterized in that** a pipe pinching device (104) with squeezing jaws (114) is provided in the liquid bath (52) and can travel back and forth along the liquid bath (52), and **in that** a first actuating device (110) for closing the squeezing jaws (114) and for keeping them closed is provided at the start of the liquid bath (52), and a second actuating device (112) for opening the squeezing jaws (114) and for keeping them open is provided at the end of the liquid bath (52).

15. Plant according to one of the preceding claims, **characterized in that** an optical pipe monitoring device (54), a printer (56), a pipe withdrawal device (58) and a pipe winding device (60) are provided downstream of the cooling device (50) in the production direction (28).

16. Plant according to Claim 15, **characterized in that** the optical pipe monitoring device (54) has a number of video cameras.

17. Plant according to any one of the preceding claims, **characterized in that** a two-piece base device (66) having a first base part (62) and a second base part (64) is provided, the metal-strip winding device (44), the metal-strip storage device (48) and the extruder station (12) being arranged on the first base part (62), the optical pipe monitoring device (54), the printer (56), the pipe withdrawal device (58) and the pipe winding device (60) being arranged on the second base part (64), and the first and the second base part (62, 64) being connected to one another by means of the cooling device (50).

## Revendications

1. Installation pour la fabrication de tubes composites multicouches (16) du type comportant un système de transformation de forme (36) destiné à convertir une bande métallique (38) en un tube métallique dont les bords longitudinaux sont superposés, un système de soudeur (30) destiné à souder les bords longitudinaux superposés, ainsi qu'un poste d'extrusion (12) comprenant une tête d'extrusion (14) succédant immédiatement au système de transformation de forme (36) et qui est réunie à un premier extrudeur (18) destiné à l'amenée d'une couche intérieure de matière plastique et à un second extrudeur (20) destiné à l'amenée d'une couche extérieure de matière plastique sur le tube métallique, et un système de refroidissement (50) destiné au refroidissement du tube composite multicouches obtenu (116), la tête d'extrusion (14) du poste d'extrusion (12) étant prévue immobile et le premier et le second extrudeurs (18 et 20) étant disposés alignés l'un avec l'autre latéralement par rapport à la tête d'extrusion (14) parallèlement à la ligne de production (16), la tête d'extrusion (14) se trouvant dans la ligne de production (16) étant prévue entre le premier et le second extrudeurs (18, 20),
**caractérisée en ce que**
un troisième et un quatrième extrudeurs (22 et 24) pour collage intermédiaire sont montés sur des systèmes de colonnes à cordons (26) immobiles, le troisième extrudeur (22) étant associé au premier extrudeur (18) et le quatrième extrudeur (24) étant associé au deuxième extrudeur (20).

2. Installation, selon la revendication 1, **caractérisée en ce que** le système de soudure (30) comporte un poste de soudure (32) avec une roue de soudure par ultrasons, le poste de soudure (32) étant réglable dans une première direction spatiale (x) parallèle à la ligne de production (16), dans une deuxième direction spatiale (y) perpendiculaire à la précédente et transversale par rapport à la ligne de production (16) et dans une troisième direction spatiale (z) perpendiculaire à la première et à la deuxième direction spatiale (x et y), et étant basculable autour d'un axe de basculement orienté dans la première direction spatiale (x).

3. Installation selon la revendication 2, **caractérisée en ce que** la roue de soudure par ultrasons est reliée à un moteur d'entraînement (34) en vue de son entraînement positif en rotation.

4. Installation selon l'une quelconque des revendications précédentes, **caractérisée en ce que** deux systèmes de galets de fermeture (94, 96) sont voisins du système de soudure (30), comportant chacun plus de deux galets de fermeture (98) répartis et se délimitant les uns des autres.

5. Installation selon la revendication 4, **caractérisée en ce que** au moins deux des galets de fermeture (98) de chaque système de galets de fermeture (94, 96) sont réglables chacun radialement.

6. Installation selon l'une quelconque des revendications précédentes, **caractérisée en ce que** le système de transformation de forme (36) comporte un élément de base (84) sur lequel est disposées, écartées l'une de l'autre l'une derrière l'autre, dans la direction d'avancement de la bande métallique à transformer des paires de galets de transformation de forme, l'élément de base (84) étant réglable transversalement à la ligne de production (16) dans la deuxième direction spatiale (y) et verticalement dans la troisième direction spatiale (z) et pouvant basculer autour d'un axe de basculement orienté dans la deuxième direction spatiale (y) et autour d'un axe de basculement orienté dans la troisième direction spatiale (z).

7. Installation selon la revendication 6, **caractérisée en ce que**, en vue du réglage dans la deuxième direction spatiale (y) et autour de l'axe de basculement orienté dans la deuxième direction spatiale (y), ainsi qu'en vue du réglage dans la troisième direction spatiale (z) et autour de l'axe de basculement orienté dans la troisième direction spatiale (x), sont prévues des roues de réglage (90, 92).

8. Installation selon l'une quelconque des revendications précédentes, **caractérisée en ce que**, en amont du système de transformation de forme (36) dans la direction de production est prévu un système de déroulement de bandes métalliques (44), qui est réglable transversalement à la ligne de production (16) dans la deuxième direction spatiale (y).

9. Installation selon la revendication 8, **caractérisée en ce que** le système de déroulement de bandes métalliques (44) comporte un élément de maintien (46) avec deux supports de poulies (42), l'élément de maintien (46) étant rotatif autour d'un axe vertical et les deux supports de poulies (42) étant prévus sur les deux côtés opposés de l'élément de maintien (46).

10. Installation selon la revendication 8, **caractérisée en ce que**, entre le système de déroulement de bandes métalliques (44) et le système de transformation de forme (36) est prévu un système de stockage de bandes métalliques (48) comportant deux parois latérales (72) verticales parallèles l'une à l'autre et à la ligne de production (16).

11. Installation selon la revendication 10, **caractérisée en ce que** les deux parois latérales (72) du système de stockage de bandes métalliques (48) sont réglables simultanément à la ligne de production (16) symétriquement en images-miroir.

12. Installation selon l'une quelconque des revendications précédentes, **caractérisée en ce que** le système de refroidissement (50) comporte un bain de liquide longitudinal (52) avec un système de buses et des systèmes de retenue du tube composite, le système de buses étant composé d'ouvertures formant des buses écartées l'une de l'autre et dirigées vers la ligne de production.

13. Installation selon la revendication 12, **caractérisée en ce que** chacun des systèmes de retenue du tube composite de galets écartés l'un de l'autre sont montés sur un levier basculant.

14. Installation selon la revendication 12, **caractérisée en ce que**, dans le bain de liquide (52) est prévu un système de desserrement du tube (104) animé d'un mouvement de va-et-vient le long du bain de liquide (52), avec des joncs de décompression (114), et **en ce qu'**à l'entrée dans le bain de liquide (52) est prévu un premier système d'actionnement (110) pour la fermeture et le maintien à l'état fermé des joncs de décompression (114) et, à la sortie du bain de liquide (52) est prévu un second système d'actionnement (112) pour l'ouverture et le maintien à l'état ouvert des joncs de décompression.

15. Installation selon l'une quelconque des revendications précédentes,**caractérisée en ce qu'**en amont par rapport à la direction de production (28) sont prévus, après le système de refroidissement (50) un système optique (54) de contrôle du tube, un système d'impression (56), un système d'extraction du tube (58) et un système d'enroulement du tube (60).

16. Installation selon la revendication 15, **caractérisée en ce que** le système optique de contrôle du tube (54) consiste en une pluralité de vidéo caméras.

17. Installation selon l'une quelconque des revendications précédentes, **caractérisé en ce qu'**il est prévu un système de base en deux portions (66) de composants d'une première portion (62) et d'une seconde portion (64), sur la première portion étant disposés le système de déroulement de bande métallique (44), le système de stockage de bande métallique (48) et le poste d'extrusion (12), sur la seconde portion étant disposés le système optique de contrôle de tube (54), le système d'impression (56), le système d'extraction du tube (58) et le système d'enroulement de tube (60), la première et la seconde portions (62, 64) étant réunies entre elles par le système de refroidissement (50).
